# EUROPEAN PATENT APPLICATION

(11) **EP 0 806 594 A1**
(43) Date of publication of application: **12.11.1997**
(21) Application number: 96303042.4
(22) Date of filing: 30.04.1996
(51) Int. Cl.: F16J 15/32

(54) **O-ring of a multi-lobular cross section**

(71) Applicant: Masuoka, Teruaki, Fujiidera-shi, Osaka (JP)
(72) Inventor: Masuoka, Teruaki, Fujiidera-shi, Osaka (JP)
(74) Representative: Hillier, Peter

(57) **Abstract**

An O ring of multi-lobular cross section has five to ten lobular lugs (1) formed along the periphery of and intergral with a body of the O ring (2). The lugs (1) are disposed symmetrical with each other and arranged at regular angular intervals in cross section, so that the two or three of the lobular lugs (1) are kept in a sliding contact with each of inner and outer walls (5,6) defining the groove (4) in which the O ring (2) is compressed. Stress imparted by the walls is distributed to be symmetrical with respect to a diametrical center line of the O ring (2), and each lug (1) is of a sufficient size to improve resistance to frictional abrasion.

## Description

### BACKGROUND OF THE INVENTION

### 1. Field of the Invention

The present invention relates to an O ring that is of a multi-lobular cross section and adapted for use to seal a certain interstice present between mechanical parts or the like.

### 2. Prior Art

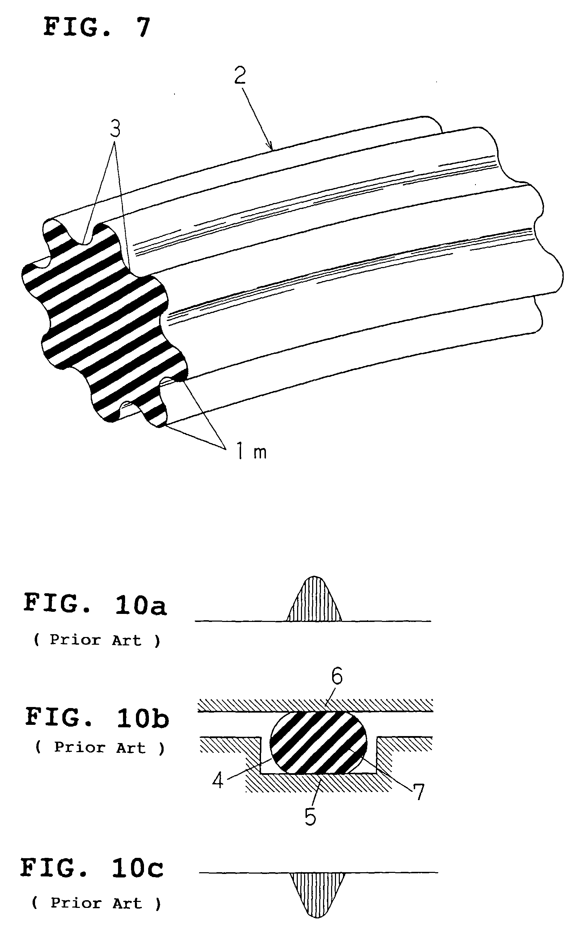

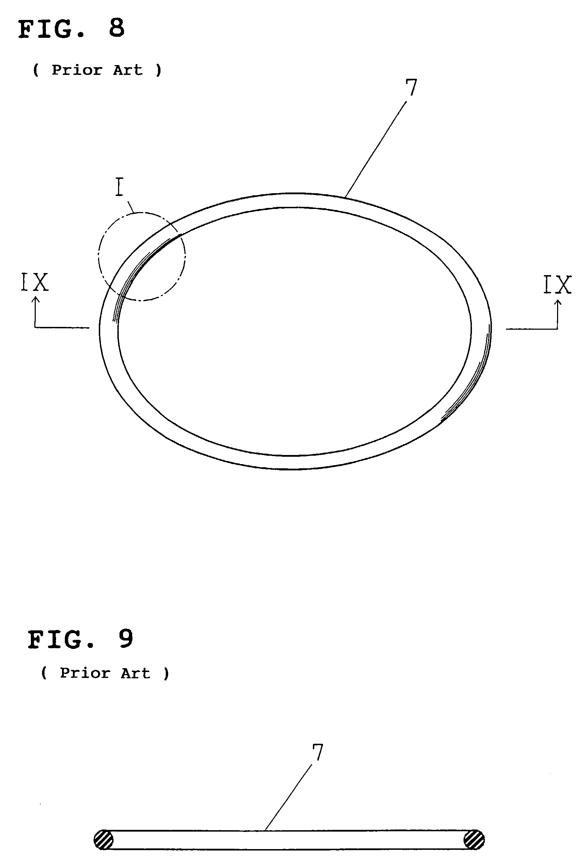

Generally, O rings 7 of this type are circular in plan view as shown in Fig. 8. Fig. 9, which is a cross section taken along the line IX - IX in Fig. 8, shows that those O rings are round in cross section. Fig. 10(b) illustrates one such O ring 7 compressed in use within an annular groove 4 formed in the interstice between the parts. The O ring thus assumes an elliptical shape in cross section having large surface areas in frictional contact with an inner and outer circular walls 5 and 6. Figs. 10(a) and 10(c) show the distribution of stress imparted to the inner and outer walls, respectively. In a case wherein the inner and outer walls 5 and 6 rotate relative to each other, a strong friction will rapidly abrade the O ring. This problem has been caused by the surface contact mechanism found in the conventional O rings. Therefore, the present inventor has proposed a linear contact configuration for O rings ( see Japanese Unexamined Patent Publication No. 5-39870 ). According to this proposal, many circular 'lobes' are formed along the periphery of and integral with the O ring. In a typical example, the improved O ring has 12 (twelve) or more such lobes so as to assume a 'polypetalous' flower in cross section.

The number of lobular and circular lugs protruding from the improved O ring is however considered rather superfluous. Many lugs are kept in a sliding contact with the groove walls such that the improved O ring resembles the classic ones in its behavior. It is difficult for those lobular lugs to be surely arranged symmetrical with respect to a diametrical center line of the O ring. Thus, those lugs undesirably tend sometimes to be worn out unevenly.

### SUMMARY OF THE INVENTION

An object of the present invention is therefore to provide an O ring of a multi-lobular cross section that is free from the problems inherent in the prior art O rings round or polypetalous in cross section. In particular, the present invention attempts to provide an O ring that comprises circular and lobular lugs formed along the periphery of and integral with the O ring, such that only two or three of the lugs stand symmetrical with each other and are kept in contact with each of inner and outer circular walls defining an annular groove formed in an interstice present between mechanical parts or the like.

According to the present invention, the O ring having the multi-lobular cross section and made of a material selected from a group consisting of rubbers and elastomers has 5 - 10 ( five to ten ) lobular lugs formed along the periphery of and integral with the O ring, wherein the lugs are disposed symmetrical with each other in a diametrical cross section and arranged at regular angular intervals.

It is also an important feature that the ratio of height ( defined later ) to width ( also defined later ) of each lug is included in a range of about 0.3 to about 1.2. Lanky lugs not included in this range will fall down when the multi-lobular O ring is compressed, whilst stocky lugs not included in said range will cause same to resemble the round O rings ( shown in Figs. 8 and ) in function.

In use, the O ring will be compressed in an annular groove in such a state that two or three of those lugs are kept in a sliding contact with each of inner and outer walls defining the groove. Consequently, stress imparted by the walls to the O ring is distributed to be symmetrical with respect to a diametrical center line of the O ring. Each lobular lug, which is of a larger size than that of each lobular lug in the prior art polypetalous O rings, is of an improved resistance to frictional abrasion.

### BRIEF DESCRIPTION OF THE DRAWINGS

Fig. 1 is a fragmentary perspective view of an O ring provided in a first embodiment and shown partly in cross section and corresponding to the part I in Fig. 8;
Fig. 2(a) is a graph showing the distribution of stress imparted to an outer wall in contact with the O ring shown in Fig. 1;
Fig. 2(b) is a cross section of the O ring shown in Fig. 1 and compressed in use;
Fig. 2(c) is a graph showing the distribution of stress imparted to an inner wall in contact with the O ring shown in Fig. 1;
Fig. 3 is a cross section of a further O ring provided in a second embodiment;
Fig. 4 is a fragmentary perspective view of the second embodiment and shown in a manner corresponding to Fig. 1;
Fig. 5 is a fragmentary perspective view of a still further O ring provided in a third embodiment and shown in a manner corresponding to Fig. 1;
Fig. 6(a) is a graph showing the distribution of stress imparted to an outer wall in contact with the O ring shown in Fig. 5;
Fig. 6(b) is a cross section of the O ring shown in Fig. 5 and compressed in use;
Fig. 6(c) is a graph showing the distribution of stress imparted to an inner wall in contact with the O ring shown in Fig. 5;
Fig. 7 is a fragmentary perspective view of another O ring provided in a fourth embodiment and shown in a manner corresponding to Fig. 1;
Fig. 8 is a plan view of the prior art O ring;
Fig. 9 is a cross section taken along the line IX - IX in Fig. 8;
Fig. 10(a) is a graph showing the distribution of stress imparted to an outer wall in contact with the prior art O ring;
Fig. 10(b) is a cross section of the prior art O ring compressed in use; and
Fig. 10(c) is a graph showing the distribution of stress imparted to an inner wall in contact with the prior art O ring.

### DETAILED DESCRIPTION OF THE PREFERRED EMBODIMENTS

Now, some embodiments of the present invention will be described in detail referring to the drawings.

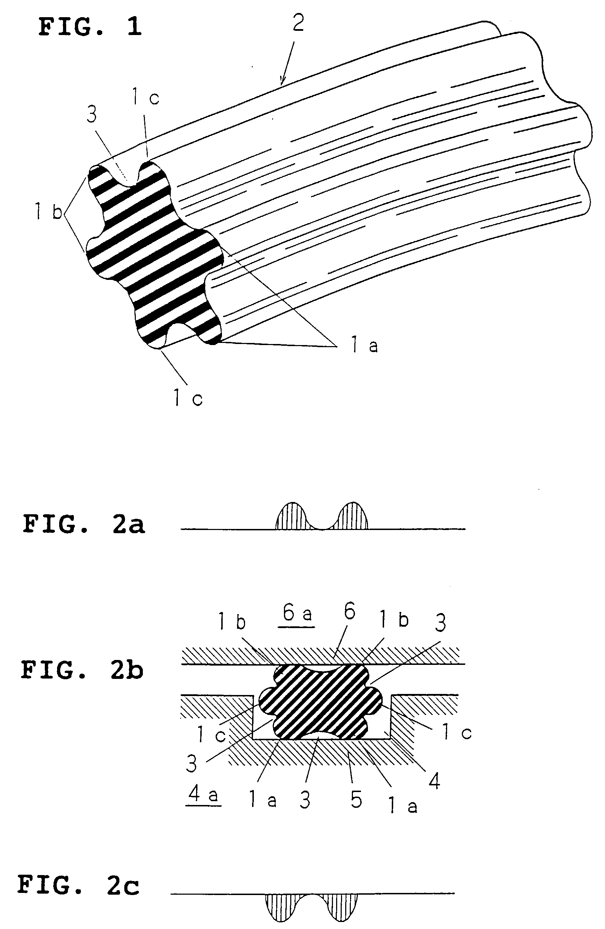

In Fig. 1, an O ring 2 in accordance with a first embodiment is generally of a sine-curved contour in cross section. 6 ( six ) lobular lugs 1a, 1b and 1c are disposed at regular angular intervals such that two of them 1c are arranged at a top and bottom, respectively. Each of curved recesses 3 is formed between the adjacent lugs. A significant amount of lubricant will be retained in the recesses, thereby rendering this O ring self-lubricant.

In use, the O ring will have its two inner lugs 1a compressed against an inner wall 5 of annular groove 4, as shown in Fig. 2. Similarly, two outer lugs 1b are be kept in a compressed and sliding contact with an outer wall 6 loosely closing the groove 4. For example, the groove may be formed in and circumferentially of a rod or the like solid and columnar member 4a. Correspondingly, the outer wall may be a portion of a collar or the like hollow and cylindrical member 6a surrounding said columnar member 4a. Stress imparted to this O ring will be distributed therein in a manner which Figs. 2a and 2c indicate in the form of graphs. It will be seen that a bottom of the recess 3 interposed between the two lugs 1a and 1a or 1b and 1b both contacting the inner or outer wall is not usually in contact with same.

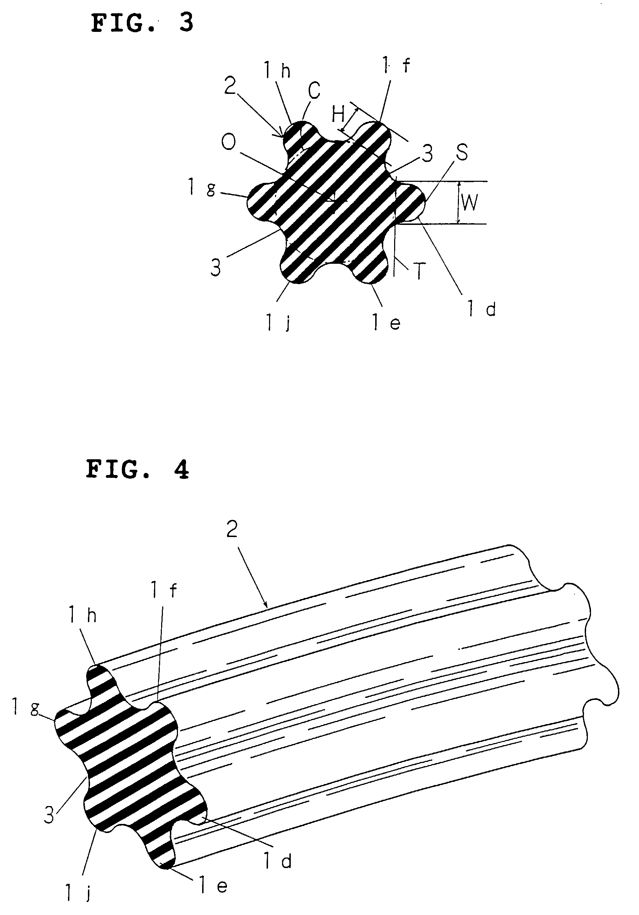

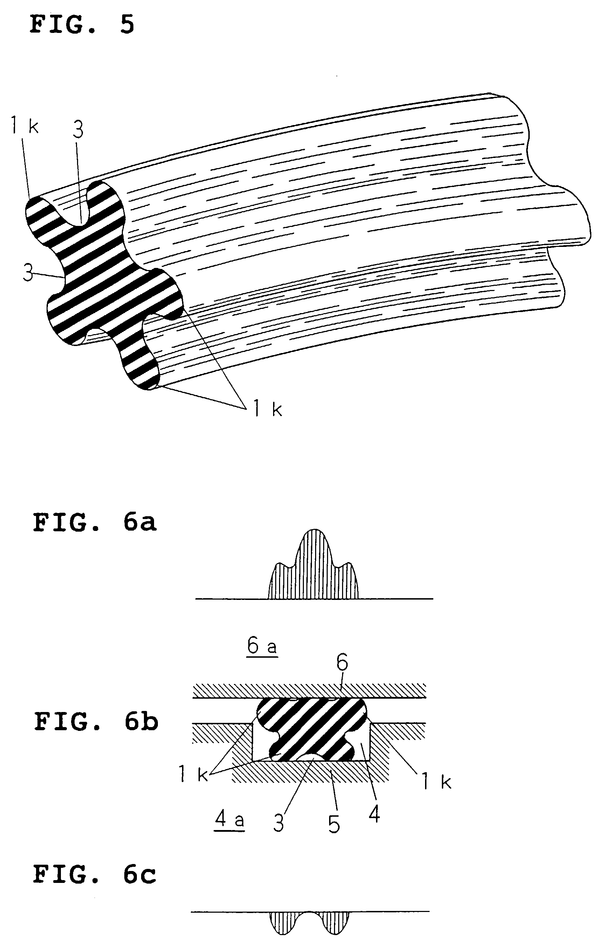

Another O ring provided in a second embodiment is shown in Fig. 3. This O ring is of a cross section similar to that of the first one, but its lobular lugs 1d, 1e, 1f, 1g, 1h and 1j are arranged with an angular phase shift of 30 degrees, in comparison with those of the O ring of first embodiment. In use, the innermost lug 1d as well as two side ones 1e and 1f accompanying the former one 1d do contact the groove inner wall 5 ( not shown ). Similarly, the outermost one 1g as well as its two neighbors 1h and 1j contact the outer wall 6. Distribution of compression stress will be the same as shown at the upper part of Fig. 6.

Fig. 5 shows a third embodiment wherein 5 ( five ) lobular lugs 1k are formed integral with and around the O ring body. Two of those lugs 1k will contact the inner wall 5, with the other three of them contacting the outer wall 6. Stress distribution in this case is shown in Fig. 6, at its upper and lower parts.

Still another O ring provided in a fourth embodiment which Fig. 7 shows does comprise 8 ( eight ) lobular lugs 1m integral with and around the O ring body. In this embodiment, each of the inner and outer walls 4 and 5 of the annular groove 4 is in contact with trio of those lugs 1m. Stress will be distributed also in a manner shown at the upper part of Fig. 6.

In every embodiment, two or three lobular lugs are brought into contact with the inner and outer walls of the annular groove which receives and holds the O ring in position. The lugs included in such a pair or trio are located symmetrical with respect to each other, whereby any uneven abrasion of those lugs will not take place during use of such an O ring. Linear contact of those lugs with said groove walls will enhance the sealing effect of the O ring provided herein.

It is noted here that if the multi-lobular O ring has only 4 ( four ) lugs in cross section, then it will be difficult to bring two or more of them into contact each of the inner and outer groove walls. Therefore, the number of such lugs is 5 ( five ) or more. However, twelve or more such lugs will render the O ring's behavior similar to that of the prior art ones round in cross section. Thus, the number of lobular lugs is 10 ( ten ) or less, and more preferably 8 ( eight ) or less for easier manufacture.

As shown in Fig. 3, the height 'H' of each lug may be defined as a distance between a summit 'S' and an inscribed circle 'C' in a radial direction. The reference symbol 'O' is the center of the inscribed circle 'C'. On the other hand, the width 'W' of each lug may be defined as a segment of tangent 'T' that is severed by the lug's contour. Although in all the embodiments described above the ratio of 'H' to 'W' is designed to be about 0.8, it may be altered within a range of about 0.3 to about 1.2. Lanky or stocky lugs are not desirable for the reasons discussed above. In a case wherein each lug 1a, etc. has a ratio 'H/W' near 0.3, the bottom of curved recess 3 may possibly touch the walls of groove 4 in use, but without adversely affecting the desirable function of the O ring.

In summary, the multi-lobular O ring compressed in the annular groove in such a manner that two or three of its lobular lugs are in a sliding contact with each of the inner and outer walls of the groove. Compression stress is distributed symmetrically in the O ring so that a weaker compression will suffice to ensure its sealing function, thereby reducing its abrasion caused by said walls rotating or moving in an axial direction relative to each other. It is a matter of course that the O ring can be used also in a case wherein the groove walls stand still.

## Claims

1. An O ring of multi-lobular cross section and made of a group consisting of rubbers and elastomers, the O ring having in a diametrical cross section five to ten lobular lugs formed along the periphery of and integral with a body of the O ring, wherein the lugs are disposed symmetrical with each other and arranged at regular angular intervals.

2. An O ring as defined in claim 1, wherein the lugs are disposed such that in use of the O ring compressed in an annular groove the two or three of the lobular lugs are kept in a sliding contact with each of inner and outer walls defining the groove.

3. An O ring as defined in claim 2, wherein the ratio of a height of each lug to a width thereof is included in a range of about 0.3 to 1.2.
